# EUROPEAN PATENT APPLICATION

(11) **EP 4 477 906 A1**
(43) Date of publication of application: **18.12.2024**
(21) Application number: 23835305.6
(22) Date of filing: 21.06.2023
(51) Int. Cl.: F16D 13/52, F16D 13/60

(54) **CLUTCH DEVICE**

(30) Priority: 05.07.2022 JP 2022108658; 14.12.2022 JP 2022199496; 25.04.2023 JP 2023071471; 15.05.2023 JP 2023080236
(71) Applicant: Kabushiki Kaisha F.C.C., Hamamatsu-shi, Shizuoka 431-1394 (JP)
(72) Inventor: NONAKA Masayuki, Hamamatsu-shi, Shizuoka 431-1394 (JP)
(74) Representative: Grünecker Patent- und Rechtsanwälte PartG mbB
(86) International application number: PCT/JP2023/022940
(87) International publication number: WO 2024/009771

(57) **Abstract**

With center-side top surfaces 60C and pressure-side top surfaces 90C being located at corresponding positions in a direction D, with ends 60AA (which are located in a second direction D2) of center-side assist cam surfaces 60A facing ends 90AA (which are located in a first direction D1) of pressure-side assist cam surfaces 90A in a circumferential direction S, and with ends 85A (which are located in a second circumferential direction S2) of spring sheets 85 being in abutment with ends 84AA (which are located in the second circumferential direction S2) of spring housing portions 84, bosses 54 are disposed through insertion holes 84H and the spring sheets 85, the ends 90AA (which are located in the first direction D1) of the pressure-side assist cam surfaces 90A are located in the second circumferential direction S2 relative to the ends 60AA (which are located in the second direction D2) of the center-side assist cam surfaces 60A, and ends 90SA (which are located in the first direction D1) of pressure-side slipper cam surfaces 90S are located in a first circumferential direction S1 relative to ends 60SA (which are located in the second direction D2) of center-side slipper cam surfaces 60S.

## Description

### TECHNICAL FIELD

The present invention relates to clutch apparatuses. More specifically, the present invention relates to clutch apparatuses each of which freely transmits a rotational driving force of an input shaft, which is rotationally driven by a motor such as an engine, to an output shaft or cuts off the rotational driving force.

This application claims the benefit of priority to Japanese Patent Application No. 2022-108658 filed on July 5, 2022, Japanese Patent Application No. 2022-199496 filed on December 14, 2022, Japanese Patent Application No. 2023-071471 filed on April 25, 2023, and Japanese Patent Application No. 2023-080236 filed on May 15, 2023, the entire contents of which are incorporated herein by reference.

### BACKGROUND ART

Vehicles known in the art, such as motorcycles, include clutch apparatuses. Such a clutch apparatus is disposed between an engine and a driving wheel so as to transmit a rotational driving force of the engine to the driving wheel or cut off the rotational driving force. The clutch apparatus usually includes: input-side rotary plates to be rotated with the rotational driving force of the engine; and output-side rotary plates connected to an output shaft through which the rotational driving force is to be transmitted to the driving wheel. The input-side rotary plates and the output-side rotary plates are disposed alternately in a stacked direction. The input-side rotary plates and the output-side rotary plates are pressed against each other so as to transmit the rotational driving force and are moved away from each other so as to cut off the rotational driving force.

Patent Literature 1 and Patent Literature 2, for example, each disclose a clutch apparatus including a clutch center and a pressure plate provided so as to be movable toward and away from the clutch center. The pressure plate is configured to be able to push input-side rotary plates and output-side rotary plates. In the clutch apparatus, the clutch center and the pressure plate are thus used by being assembled to each other.

The clutch center and the pressure plate of the clutch apparatus according to each of Patent Literature 1 and Patent Literature 2 each include: an assist cam surface to increase a pushing force for the input-side rotary plates and the output-side rotary by generating a force in a direction in which the pressure plate is moved toward the clutch center when a rotational driving force of an engine is transmittable to an output shaft; and a slipper cam surface to reduce the pushing force for the input-side rotary plates and the output-side rotary by moving the pressure plate away from the clutch center when the clutch center is higher in rotational speed than the pressure plate.

### CITATION LIST

### PATENT LITERATURE

[Patent Literature 1] Japanese Patent No. 5847551
[Patent Literature 2] WO 2018/172176

### SUMMARY OF INVENTION

### TECHNICAL PROBLEM

Depending on the positions of the assist cam surface and the slipper cam surface of the clutch center and the assist cam surface and the slipper cam surface of the pressure plate, the cam surfaces of both of the clutch center and the pressure plate may interfere with each other when the clutch center and the pressure plate are assembled to each other, which may present an assembly difficulty.

The present invention has been made in view of these points, and its object is to provide clutch apparatuses in each of which a clutch center and a pressure plate are assembled to each other with facility.

### SOLUTION TO PROBLEM

A clutch apparatus according to the present invention is a clutch apparatus to transmit a rotational driving force of an input shaft to an output shaft or cut off the rotational driving force. The clutch apparatus includes: a clutch center housed in a clutch housing holding input-side rotary plates to be rotationally driven in response to rotational driving of the input shaft, the clutch center holding output-side rotary plates disposed alternately with the input-side rotary plates, the clutch center being rotationally driven together with the output shaft; a pressure plate provided so as to be movable toward or away from the clutch center and rotatable relative to the clutch center, the pressure plate being able to push the input-side rotary plates and the output-side rotary plates; and a stopper plate provided so as to be able to come into contact with the pressure plate and configured to, assuming that a direction in which the pressure plate moves toward the clutch center is a first direction and a direction in which the pressure plate moves away from the clutch center is a second direction, prevent the pressure plate from moving away from the clutch center in the second direction by a predetermined distance or more. The clutch center includes: an output shaft holder to which the output shaft is connected; center-side cam portions located radially outward of the output shaft holder, the center-side cam portions including center-side assist cam surfaces to, upon being rotated relative to the pressure plate, produce a force in a direction in which the pressure plate is moved toward the clutch center so as to increase a pushing force for the input-side rotary plates and the output-side rotary plates, and center-side slipper cam surfaces to, upon being rotated relative to the pressure plate, move the pressure plate away from the clutch center so as to reduce the pushing force for the input-side rotary plates and the output-side rotary plates; and bosses located radially outward of the output shaft holder and extending toward the pressure plate, the bosses being provided with threaded holes for attachment of the stopper plate. The pressure plate includes pressure-side cam portions including pressure-side assist cam surfaces configured to be able to come into contact with the center-side assist cam surfaces and to, upon being rotated relative to the clutch center, produce a force in the direction in which the pressure plate is moved toward the clutch center so as to increase the pushing force for the input-side rotary plates and the output-side rotary plates, and pressure-side slipper cam surfaces configured to be able to come into contact with the center-side slipper cam surfaces and to, upon being rotated relative to the clutch center, move the pressure plate away from the clutch center so as to reduce the pushing force for the input-side rotary plates and the output-side rotary plates. Assuming that a direction from a first one of the pressure-side cam portions to a second one of the pressure-side cam portions in a circumferential direction is a first circumferential direction and a direction from the second one of the pressure-side cam portions to the first one of the pressure-side cam portions in the circumferential direction is a second circumferential direction, a length in the circumferential direction between a first direction end of the pressure-side assist cam surface that is included in the first one of the pressure-side cam portions adjacent to each other in the circumferential direction and is located in the first circumferential direction and a first direction end of the pressure-side slipper cam surface that is included in the second one of the pressure-side cam portions adjacent to each other in the circumferential direction and is located in the second circumferential direction is longer than a length in the circumferential direction between a second direction end of the center-side assist cam surface of an associated one of the center-side cam portions and a second direction end of the center-side slipper cam surface of the associated center-side cam portion, the first direction ends being ends located in the first direction, the second direction ends being ends located in the second direction. The pressure plate includes spring housing portions which are provided in the pressure-side cam portions so as to be recessed in the first direction from the second direction and in which pressure springs to urge the pressure plate in the first direction are housed. The spring housing portions are provided with insertion holes which pass therethrough and into which the bosses are inserted. The pressure springs are externally fitted to the bosses inserted into the insertion holes. Within an entire range in the circumferential direction from locations where the pressure-side slipper cam surfaces and the center-side slipper cam surfaces are immediately before coming into contact with each other to locations where the pressure-side assist cam surfaces and the center-side assist cam surfaces are immediately before coming into contact with each other, distances in the circumferential direction between the bosses and ends of the insertion holes located adjacent to the pressure-side assist cam surfaces are longer than distances in the circumferential direction between the bosses and ends of the insertion holes located adjacent to the pressure-side slipper cam surfaces.

In the clutch apparatus according to the present invention, the length in the circumferential direction between the end (which is located toward the clutch center) of the pressure-side assist cam surface of the first one of the pressure-side cam portions adjacent to each other in the circumferential direction and the end (which is located toward the clutch center) of the pressure-side slipper cam surface of the second one of the pressure-side cam portions adjacent to each other in the circumferential direction is longer than the length in the circumferential direction between the end (which is located toward the pressure plate) of the center-side assist cam surface of an associated one of the center-side cam portions and the end (which is located toward the pressure plate) of the center-side slipper cam surface of the associated center-side cam portion. The above-described embodiment makes it possible to prevent interference of the pressure-side assist cam surfaces and the center-side assist cam surfaces with each other and interference of the pressure-side slipper cam surfaces and the center-side slipper cam surfaces with each other in assembling the pressure plate to the clutch center, and thus makes it possible to facilitate assembling the pressure plate and the clutch center to each other. Within the entire range in the circumferential direction from the locations where the pressure-side slipper cam surfaces and the center-side slipper cam surfaces are immediately before coming into contact with each other to the locations where the pressure-side assist cam surfaces and the center-side assist cam surfaces are immediately before coming into contact with each other, the distances in the circumferential direction between the bosses and the ends of the insertion holes located adjacent to the pressure-side assist cam surfaces are longer than the distances in the circumferential direction between the bosses and the ends of the insertion holes located adjacent to the pressure-side slipper cam surfaces. The above-described embodiment enables the pressure plate to be away from the clutch center by a sufficient distance while preventing contact between the bosses and the spring housing portions.

Another clutch apparatus according to the present invention is a clutch apparatus to transmit a rotational driving force of an input shaft to an output shaft or cut off the rotational driving force. The clutch apparatus includes: a clutch center housed in a clutch housing holding input-side rotary plates to be rotationally driven in response to rotational driving of the input shaft, the clutch center being rotationally driven together with the output shaft; a pressure plate provided so as to be movable toward or away from the clutch center and rotatable relative to the clutch center, the pressure plate holding output-side rotary plates disposed alternately with the input-side rotary plates, the pressure plate being able to push the input-side rotary plates and the output-side rotary plates; and a stopper plate provided so as to be able to come into contact with the pressure plate and configured to, assuming that a direction in which the pressure plate moves toward the clutch center is a first direction and a direction in which the pressure plate moves away from the clutch center is a second direction, prevent the pressure plate from moving away from the clutch center in the second direction by a predetermined distance or more. The clutch center includes: an output shaft holder to which the output shaft is connected; center-side cam portions located radially outward of the output shaft holder, the center-side cam portions including center-side assist cam surfaces to, upon being rotated relative to the pressure plate, produce a force in a direction in which the pressure plate is moved toward the clutch center so as to increase a pushing force for the input-side rotary plates and the output-side rotary plates, and center-side slipper cam surfaces to, upon being rotated relative to the pressure plate, move the pressure plate away from the clutch center so as to reduce the pushing force for the input-side rotary plates and the output-side rotary plates; and bosses located radially outward of the output shaft holder and extending toward the pressure plate, the bosses being provided with threaded holes for attachment of the stopper plate. The pressure plate includes: pressure-side cam portions including pressure-side assist cam surfaces configured to be able to come into contact with the center-side assist cam surfaces and to, upon being rotated relative to the clutch center, produce a force in the direction in which the pressure plate is moved toward the clutch center so as to increase the pushing force for the input-side rotary plates and the output-side rotary plates, and pressure-side slipper cam surfaces configured to be able to come into contact with the center-side slipper cam surfaces and to, upon being rotated relative to the clutch center, move the pressure plate away from the clutch center so as to reduce the pushing force for the input-side rotary plates and the output-side rotary plates. Assuming that a direction from a first one of the pressure-side cam portions to a second one of the pressure-side cam portions in a circumferential direction is a first circumferential direction and a direction from the second one of the pressure-side cam portions to the first one of the pressure-side cam portions in the circumferential direction is a second circumferential direction, a length in the circumferential direction between a first direction end of the pressure-side assist cam surface that is included in the first one of the pressure-side cam portions adjacent to each other in the circumferential direction and is located in the first circumferential direction and a first direction end of the pressure-side slipper cam surface that is included in the second one of the pressure-side cam portions adjacent to each other in the circumferential direction and is located in the second circumferential direction is longer than a length in the circumferential direction between a second direction end of the center-side assist cam surface of an associated one of the center-side cam portions and a second direction end of the center-side slipper cam surface of the associated center-side cam portion, the first direction ends being ends located in the first direction, the second direction ends being ends located in the second direction. The pressure plate includes spring housing portions which are provided in the pressure-side cam portions so as to be recessed in the first direction from the second direction and in which pressure springs to urge the pressure plate in the first direction are housed. The spring housing portions are provided with insertion holes which pass therethrough and into which the bosses are inserted. The pressure springs are externally fitted to the bosses inserted into the insertion holes. Within an entire range in the circumferential direction from locations where the pressure-side slipper cam surfaces and the center-side slipper cam surfaces are immediately before coming into contact with each other to locations where the pressure-side assist cam surfaces and the center-side assist cam surfaces are immediately before coming into contact with each other, distances in the circumferential direction between the bosses and ends of the insertion holes located adjacent to the pressure-side assist cam surfaces are longer than distances in the circumferential direction between the bosses and ends of the insertion holes located adjacent to the pressure-side slipper cam surfaces.

In said another clutch apparatus according to the present invention, the length in the circumferential direction between the end (which is located toward the clutch center) of the pressure-side assist cam surface of the first one of the pressure-side cam portions adjacent to each other in the circumferential direction and the end (which is located toward the clutch center) of the pressure-side slipper cam surface of the second one of the pressure-side cam portions adjacent to each other in the circumferential direction is longer than the length in the circumferential direction between the end (which is located toward the pressure plate) of the center-side assist cam surface of an associated one of the center-side cam portions and the end (which is located toward the pressure plate) of the center-side slipper cam surface of the associated center-side cam portion. The above-described embodiment makes it possible to prevent interference of the pressure-side assist cam surfaces and the center-side assist cam surfaces with each other and interference of the pressure-side slipper cam surfaces and the center-side slipper cam surfaces with each other in assembling the pressure plate to the clutch center, and thus makes it possible to facilitate assembling the pressure plate and the clutch center to each other. Within the entire range in the circumferential direction from the locations where the pressure-side slipper cam surfaces and the center-side slipper cam surfaces are immediately before coming into contact with each other to the locations where the pressure-side assist cam surfaces and the center-side assist cam surfaces are immediately before coming into contact with each other, the distances in the circumferential direction between the bosses and the ends of the insertion holes located adjacent to the pressure-side assist cam surfaces are longer than the distances in the circumferential direction between the bosses and the ends of the insertion holes located adjacent to the pressure-side slipper cam surfaces. The above-described embodiment enables the pressure plate to be away from the clutch center by a sufficient distance while preventing contact between the bosses and the spring housing portions.

### EFFECTS OF INVENTION

The present invention is able to provide clutch apparatuses in each of which a clutch center and a pressure plate are assembled to each other with facility.

### BRIEF DESCRIPTION OF DRAWINGS

[FIG. 1] A cross-sectional view of a clutch apparatus according to one embodiment.
[FIG. 2] A perspective view of a clutch center according to said one embodiment.
[FIG. 3] A plan view of the clutch center according to said one embodiment.
[FIG. 4] A perspective view of a pressure plate according to said one embodiment.
[FIG. 5] A plan view of the pressure plate according to said one embodiment.
[FIG. 6] Another perspective view of the pressure plate according to said one embodiment.
[FIG. 7] Another plan view of the pressure plate according to said one embodiment.
[FIG. 8] A partially enlarged side view of a pressure-side cam portion according to said one embodiment.
[FIG. 9] A partially enlarged perspective view of the pressure plate according to said one embodiment.
[FIG. 10] A plan view of the clutch center and the pressure plate according to said one embodiment that are in an assembled state.
[FIG. 11A] A schematic diagram illustrating actions of a center-side assist cam surface and a pressure-side assist cam surface.
[FIG. 11B] A schematic diagram illustrating actions of a center-side slipper cam surface and a pressure-side slipper cam surface.
[FIG. 12] A partially enlarged cross-sectional view of the pressure plate and the clutch center according to said one embodiment.
[FIG. 13] A partially enlarged cross-sectional view of a pressure plate and a clutch center according to another embodiment.
[FIG. 14] An exploded perspective view of a clutch center and a pressure plate according to still another embodiment.
[FIG. 15] A perspective view of the pressure plate according to said still another embodiment.

### DESCRIPTION OF EMBODIMENTS

Embodiments of clutch apparatuses according to the present invention will be described below with reference to the drawings. The embodiments described herein are naturally not intended to limit the present invention in any way. Components and elements having the same functions will be identified by the same reference signs and will not be described or will be described briefly when deemed redundant.

### First Embodiment

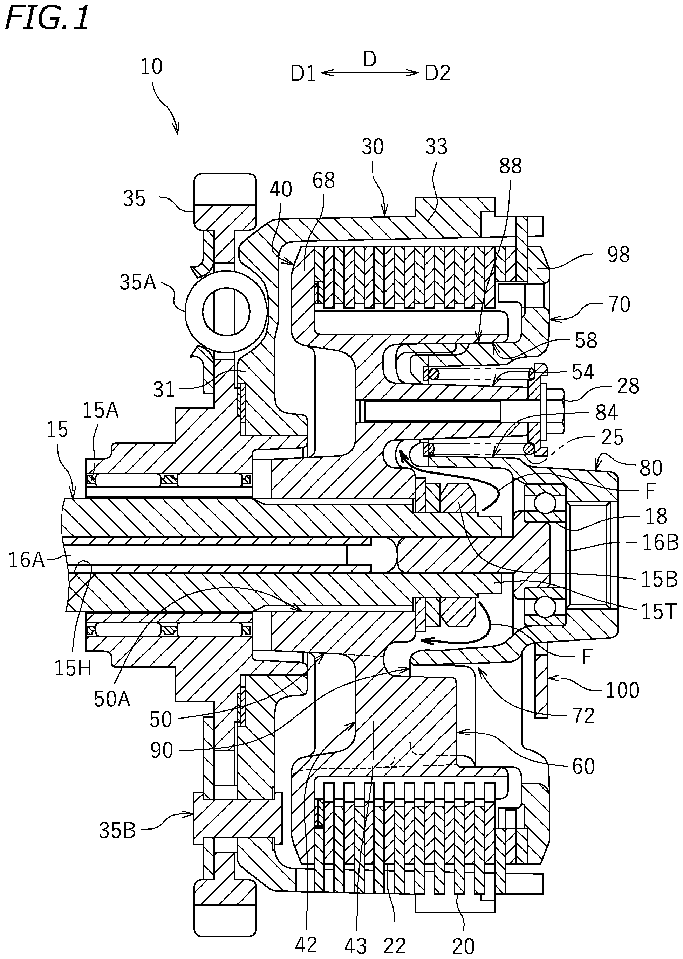

FIG. 1 is a cross-sectional view of a clutch apparatus 10 according to a first embodiment. The clutch apparatus 10 is installed, for example, on a vehicle, such as a motorcycle. The clutch apparatus 10 is, for example, an apparatus to transmit a rotational driving force of an input shaft (e.g., a crankshaft) of an engine on a motorcycle to an output shaft 15 or cut off the rotational driving force. The clutch apparatus 10 is an apparatus to transmit the rotational driving force of the input shaft to a driving wheel (e.g., a rear wheel) through the output shaft 15 or cut off the rotational driving force. The clutch apparatus 10 is disposed between the engine and a transmission.

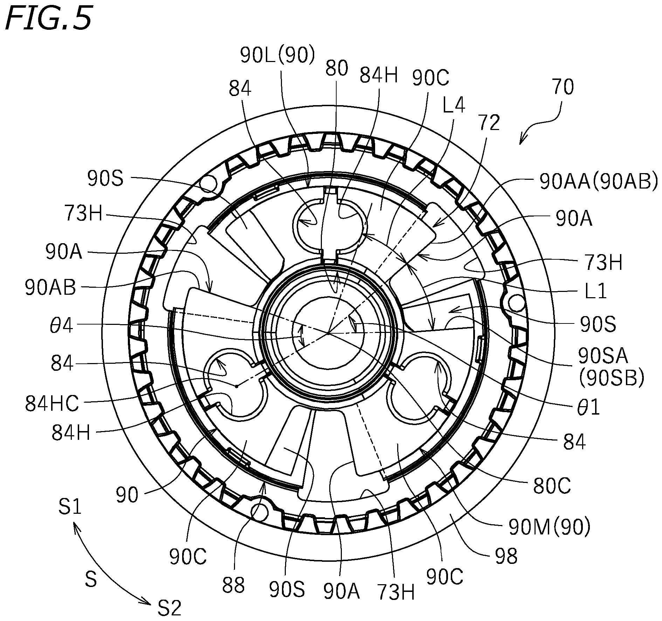

In the following description, a direction in which a pressure plate 70 of the clutch apparatus 10 moves toward and away from a clutch center 40 will be referred to as a "direction D" (which is an example of a movement direction), a direction in which the pressure plate 70 moves toward the clutch center 40 will be referred to as a "first direction D1", and a direction in which the pressure plate 70 moves away from the clutch center 40 will be referred to as a "second direction D2". A circumferential direction of the clutch center 40 and the pressure plate 70 will be referred to as a "circumferential direction S", a direction from a first one of pressure-side cam portions 90 to a second one of the pressure-side cam portions 90 in the circumferential direction S will be referred to as a "first circumferential direction S1" (see FIG. 5), and a direction from the second one of the pressure-side cam portions 90 to the first one of the pressure-side cam portions 90 in the circumferential direction S will be referred to as a "second circumferential direction S2" (see

FIG. 5). In the present embodiment, an axial direction of the output shaft 15, an axial direction of a clutch housing 30, an axial direction of the clutch center 40, and an axial direction of the pressure plate 70 each correspond to the direction D. The pressure plate 70 and the clutch center 40 rotate in the first circumferential direction S1. These directions, however, are defined merely for the sake of convenience of description and thus do not limit in any way how the clutch apparatus 10 may be installed or do not limit in any way the present invention.

As illustrated in FIG. 1, the clutch apparatus 10 includes the output shaft 15, input-side rotary plates 20, output-side rotary plates 22, the clutch housing 30, the clutch center 40, the pressure plate 70, and a stopper plate 100.

As illustrated in FIG. 1, the output shaft 15 is a hollow shaft body. A first end portion of the output shaft 15 supports an input gear 35 and the clutch housing 30 (which will be described below) through a needle bearing 15A such that the input gear 35 and the clutch housing 30 are rotatable. The output shaft 15 supports the clutch center 40 through a nut 15B such that the clutch center 40 is fixed to the output shaft 15. In other words, the output shaft 15 rotates together with the clutch center 40. A second end portion of the output shaft 15 is connected to, for example, the transmission (not illustrated) of the motorcycle.

As illustrated in FIG. 1, the output shaft 15 includes, in its hollow portion 15H, a push rod 16A and a push member 16B provided adjacent to the push rod 16A. The hollow portion 15H functions as a flow passage for clutch oil. Clutch oil flows through the output shaft 15, i.e., through its hollow portion 15H. The push rod 16A and the push member 16B are provided so as to be slidable through the hollow portion 15H of the output shaft 15. A first end portion (i.e., a left end portion in FIG. 1) of the push rod 16A is connected to a clutch operation lever (not illustrated) of the motorcycle such that the push rod 16A slides through the hollow portion 15H in response to an operation performed on the clutch operation lever and thus pushes the push member 16B in the second direction D2. A portion of the push member 16B is protruded out of the output shaft 15 (i.e., in the second direction D2 in this embodiment) and connected to a release bearing 18 provided on the pressure plate 70. The push rod 16A and the push member 16B are each smaller than an inner diameter of the hollow portion 15H, which allows clutch oil to flow through the hollow portion 15H.

The clutch housing 30 is made of an aluminum alloy. The clutch housing 30 has a cylindrical shape with a bottom. As illustrated in FIG. 1, the clutch housing 30 includes a substantially circular bottom wall 31 and a side wall 33 extending in the second direction D2 from an edge of the bottom wall 31. The clutch housing 30 holds the input-side rotary plates 20.

As illustrated in FIG. 1, the bottom wall 31 of the clutch housing 30 is provided with the input gear 35. The input gear 35 is secured through a torque damper 35A to the bottom wall 31 with a rivet 35B. The input gear 35 is in mesh with a driving gear (not illustrated) that rotates in response to rotational driving of the input shaft of the engine. The input gear 35 is rotationally driven independently of the output shaft 15 and together with the clutch housing 30.

The input-side rotary plates 20 are rotationally driven in response to rotational driving of the input shaft. As illustrated in FIG. 1, the input-side rotary plates 20 are held on an inner peripheral surface of the side wall 33 of the clutch housing 30. The input-side rotary plates 20 are held by the clutch housing 30 through spline-fitting. The input-side rotary plates 20 are provided so as to be movable in the axial direction of the clutch housing 30. The input-side rotary plates 20 are provided so as to be rotatable together with the clutch housing 30.

The input-side rotary plates 20 are components to be pushed against the output-side rotary plates 22. The input-side rotary plates 20 are annular flat plates. The input-side rotary plates 20 are each formed by punching a thin plate made of a steel plate cold commercial (SPCC) material into an annular shape. Friction materials (not illustrated) made of pieces of paper are affixed to front and back surfaces of the input-side rotary plates 20. Between the friction materials, grooves for retaining clutch oil are formed to a depth of a few or several µm to a few or several tens of µm.

As illustrated in FIG. 1, the clutch center 40 is housed in the clutch housing 30. The clutch center 40 is disposed concentrically with the clutch housing 30. The clutch center 40 includes a cylindrical body 42 and a flange 68 extending radially outward from an outer peripheral edge of the body 42. The clutch center 40 holds the output-side rotary plates 22 disposed alternately with the input-side rotary plates 20 in the direction D. The clutch center 40 is rotationally driven together with the output shaft 15.

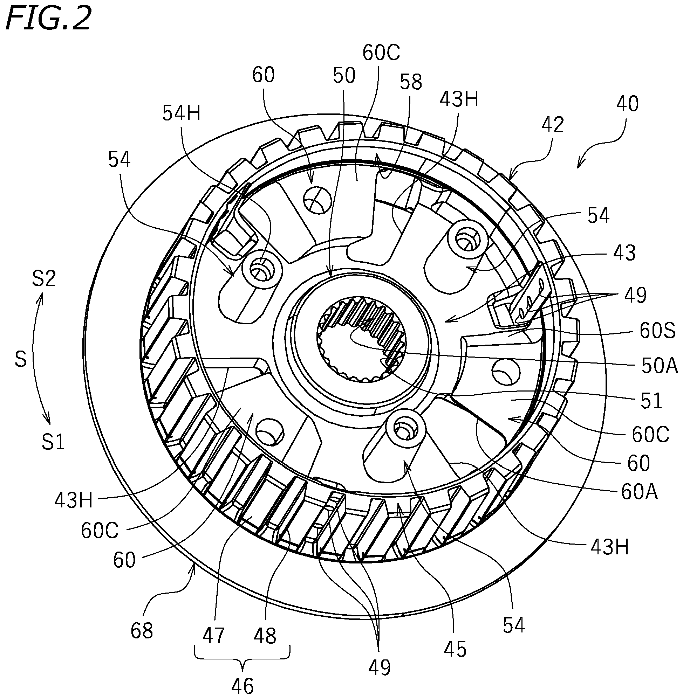

As illustrated in FIG. 2, the body 42 includes: an annular base wall 43; an outer peripheral wall 45 located radially outward of the base wall 43 and extending in the second direction D2; an output shaft holder 50 provided in a center of the base wall 43; center-side cam portions 60 connected to the base wall 43 and the outer peripheral wall 45; and a center-side fitting portion 58.

The output shaft holder 50 has a cylindrical shape. The output shaft holder 50 is provided with an insertion hole 51 into which the output shaft 15 is inserted and spline-fitted. The insertion hole 51 is provided through the base wall 43. An inner peripheral surface 50A of the output shaft holder 50, which defines the insertion hole 51, is provided with spline grooves extending in its axial direction. The output shaft 15 is connected to the output shaft holder 50.

As illustrated in FIG. 2, the outer peripheral wall 45 of the clutch center 40 is disposed radially outward of the output shaft holder 50. An outer peripheral surface of the outer peripheral wall 45 is provided with a spline-fitting portion 46. The spline-fitting portion 46 includes: center-side fitting teeth 47 extending in the axial direction of the clutch center 40 along the outer peripheral surface of the outer peripheral wall 45; spline grooves 48 provided between adjacent ones of the center-side fitting teeth 47 and extending in the axial direction of the clutch center 40; and oil discharge holes 49. The center-side fitting teeth 47 hold the output-side rotary plates 22. The center-side fitting teeth 47 are arranged in the circumferential direction S. The center-side fitting teeth 47 are provided at equal intervals in the circumferential direction S. The center-side fitting teeth 47 are similar in shape. The center-side fitting teeth 47 protrude radially outward from the outer peripheral surface of the outer peripheral wall 45. The oil discharge holes 49 are each provided radially through the outer peripheral wall 45. The oil discharge holes 49 are each provided between adjacent ones of the center-side fitting teeth 47. In other words, the oil discharge holes 49 are provided in the spline grooves 48. The oil discharge holes 49 are provided laterally of the center-side cam portions 60. The oil discharge holes 49 are provided laterally of center-side slipper cam surfaces 60S of the center-side cam portions 60. The oil discharge holes 49 are provided in the second circumferential direction S2 relative to the center-side slipper cam surfaces 60S. The oil discharge holes 49 are provided in the first circumferential direction S 1 relative to bosses 54 (which will be described below). In the present embodiment, three of the oil discharge holes 49 are provided at each of three locations situated on the outer peripheral wall 45 in the circumferential direction S. The oil discharge holes 49 are disposed at equal intervals in the circumferential direction S. The oil discharge holes 49 allow communication between inside and outside of the clutch center 40. The oil discharge holes 49 are holes through which clutch oil that has flowed out of the output shaft 15 into the clutch center 40 is to be discharged out of the clutch center 40.

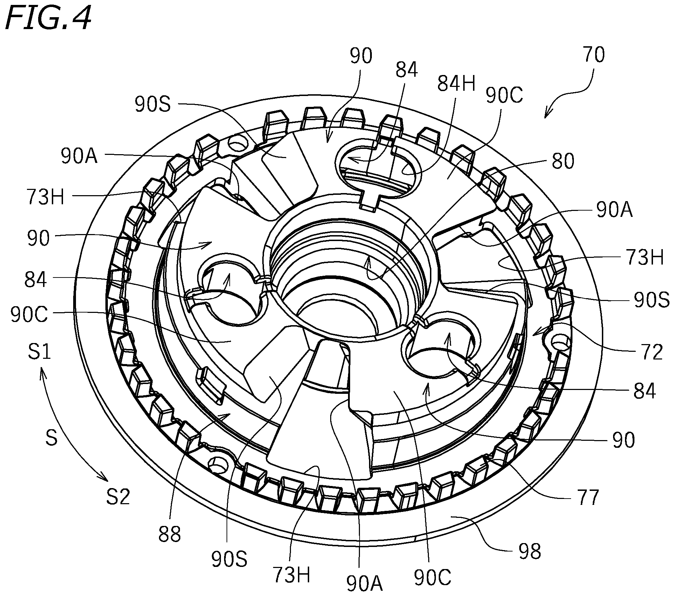

The output-side rotary plates 22 are held by the spline-fitting portion 46 of the clutch center 40 and the pressure plate 70. Portions of the output-side rotary plates 22 are held by the center-side fitting teeth 47 and the spline grooves 48 of the clutch center 40 through spline-fitting. The other portions of the output-side rotary plates 22 are held by after-mentioned pressure-side fitting teeth 77 (see FIG. 4) of the pressure plate 70. The output-side rotary plates 22 are provided so as to be movable in the axial direction of the clutch center 40. The output-side rotary plates 22 are provided so as to be rotatable together with the clutch center 40.

The output-side rotary plates 22 are components to be pushed against the input-side rotary plates 20. The output-side rotary plates 22 are annular flat plates. The output-side rotary plates 22 are each formed by punching a thin plate made of an SPCC material into an annular shape. On front and back surfaces of the output-side rotary plates 22, grooves for retaining clutch oil are formed to a depth of a few or several µm to a few or several tens of µm. The front and back surfaces of the output-side rotary plates 22 are each subjected to surface hardening in order to enhance wear resistance. Alternatively, the friction materials provided on the input-side rotary plates 20 may be provided on the output-side rotary plates 22 instead of being provided on the input-side rotary plates 20, or may be provided on both of the input-side rotary plates 20 and the output-side rotary plates 22.

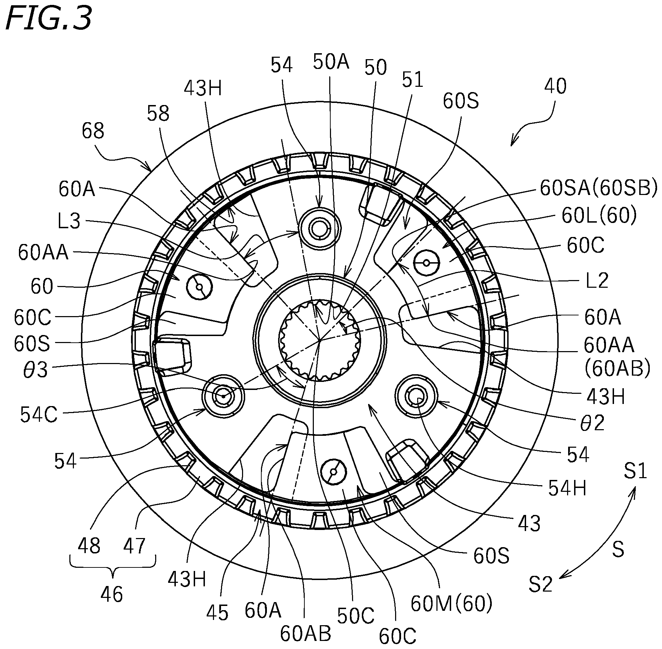

The center-side cam portions 60 are each in the shape of a block with cam surfaces that are inclined surfaces included in an assist & slipper (registered trademark) mechanism for producing an assist torque, which is a force to increase a pushing force (or pressing force) for the input-side rotary plates 20 and the output-side rotary plates 22, or a slipper torque, which is a force to move the input-side rotary plates 20 and the output-side rotary plates 22 away from each other promptly so as to make a transition to a half-clutch state. The center-side cam portions 60 are provided so as to be protruded in the second direction D2 from the base wall 43. As illustrated in FIG. 3, the center-side cam portions 60 are disposed at equal intervals in the circumferential direction S of the clutch center 40. In the present embodiment, the number of center-side cam portions 60 included in the clutch center 40 is three. The number of center-side cam portions 60, however, is not limited to three.

As illustrated in FIG. 3, the center-side cam portions 60 are located radially outward of the output shaft holder 50. The center-side cam portions 60 include center-side assist cam surfaces 60A, center-side slipper cam surfaces 60S, and center-side top surfaces 60C. The center-side assist cam surfaces 60A are configured to, upon being rotated relative to the pressure plate 70, produce a force in a direction in which the pressure plate 70 is moved toward the clutch center 40 in order to increase the pushing force (or pressing force) for the input-side rotary plates 20 and the output-side rotary plates 22. In the present embodiment, when the force is produced, the position of the pressure plate 70 relative to the clutch center 40 remains unchanged, making it unnecessary for the pressure plate 70 to physically move toward the clutch center 40. Alternatively, the pressure plate 70 may physically move relative to the clutch center 40. The center-side slipper cam surfaces 60S are configured to, upon being rotated relative to the pressure plate 70, move the pressure plate 70 away from the clutch center 40 in order to reduce the pushing force (or pressing force) for the input-side rotary plates 20 and the output-side rotary plates 22. The center-side assist cam surface 60A of a first center-side cam portion 60L, which is one of the center-side cam portions 60 adjacent to each other in the circumferential direction S, and the center-side slipper cam surface 60S of a second center-side cam portion 60M, which is another one of the center-side cam portions 60 adjacent to each other in the circumferential direction S, are disposed to face each other in the circumferential direction S. The center-side top surfaces 60C are located between the center-side assist cam surfaces 60A and the center-side slipper cam surfaces 60S. More specifically, the center-side top surfaces 60C are located between the center-side assist cam surfaces 60A and the center-side slipper cam surfaces 60S in the circumferential direction S. The center-side top surfaces 60C are continuous with the center-side assist cam surfaces 60A and the center-side slipper cam surfaces 60S. Connections between the center-side top surfaces 60C and the center-side assist cam surfaces 60A and connections between the center-side top surfaces 60C and the center-side slipper cam surfaces 60S are curved surfaces.

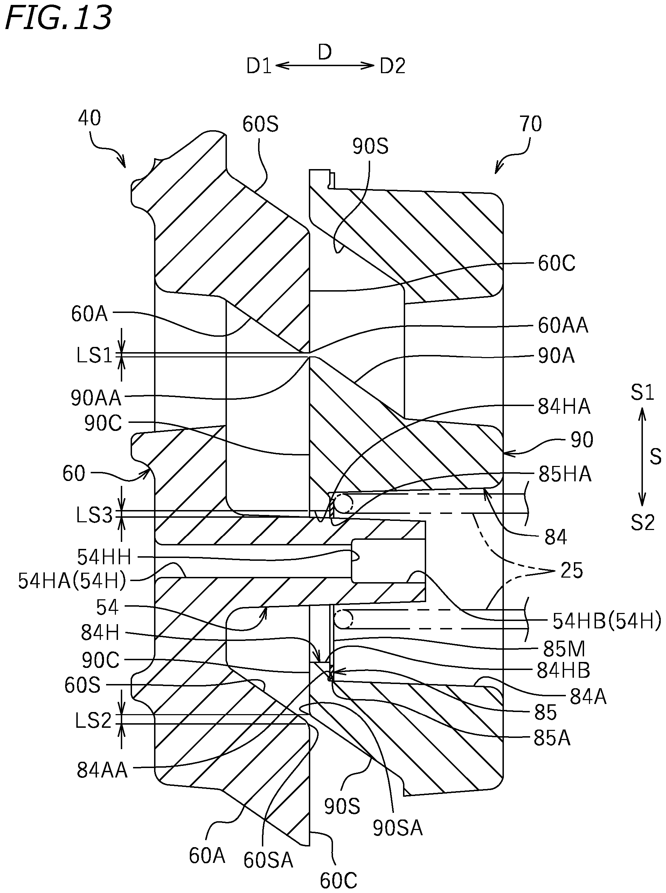

As illustrated in FIG. 2, the clutch center 40 includes the bosses 54 (the number of which is three in the present embodiment). The bosses 54 are components supporting the pressure plate 70. The bosses 54 are disposed at equal intervals in the circumferential direction S. The bosses 54 each have a cylindrical shape. The bosses 54 are located radially outward of the output shaft holder 50. The bosses 54 extend toward the pressure plate 70 (i.e., in the second direction D2). The bosses 54 are provided on the base wall 43. The bosses 54 are provided with threaded holes 54H into which bolts 28 (see FIG. 1) are inserted. The threaded holes 54H extend in the axial direction of the clutch center 40. The threaded holes 54H are holes for attachment of the stopper plate 100. As illustrated in FIG. 13, the threaded holes 54H include: first threaded holes 54HA to which threaded portions of the bolts 28 are to be screwed; and second threaded holes 54HB into which shanks (i.e., non-threaded portions) of the bolts 28 located between their heads and threaded portions are to be inserted.

As illustrated in FIG. 2, the center-side fitting portion 58 is located radially outward of the output shaft holder 50. The center-side fitting portion 58 is located radially outward of the center-side cam portions 60. The center-side fitting portion 58 is located in the second direction D2 relative to the center-side cam portions 60. The center-side fitting portion 58 is provided on an inner peripheral surface of the outer peripheral wall 45. The center-side fitting portion 58 is configured to be externally fitted to an after-mentioned pressure-side fitting portion 88 (see FIG. 4) so as to be slidable thereon. The center-side fitting portion 58 has an inner diameter falling within a fitting tolerance that allows clutch oil flowing out of an extremity 15T of the output shaft 15 to flow between the center-side fitting portion 58 and the pressure-side fitting portion 88. In other words, the center-side fitting portion 58 and the pressure-side fitting portion 88 (which will be described below) have a clearance therebetween. In the present embodiment, the center-side fitting portion 58 has, for example, an inner diameter larger than an outer diameter of the pressure-side fitting portion 88 by 0.1 mm. A dimensional tolerance between the inner diameter of the center-side fitting portion 58 and the outer diameter of the pressure-side fitting portion 88 may be suitably set in accordance with the amount of clutch oil to be flowed, and may be, for example, between 0.1 mm and 0.5 mm inclusive.

As illustrated in FIGS. 2 and 3, the clutch center 40 includes center-side cam holes 43H each passing through a portion of the base wall 43. The center-side cam holes 43H each extend to the outer peripheral wall 45 from a position laterally of the output shaft holder 50. The center-side cam holes 43H are provided between the center-side assist cam surfaces 60A of the center-side cam portions 60 and the bosses 54. As viewed in the axial direction of the clutch center 40, the center-side assist cam surfaces 60A and portions of the center-side cam holes 43H overlap with each other.

As illustrated in FIG. 1, the pressure plate 70 is provided so as to be movable toward or away from the clutch center 40 and rotatable relative to the clutch center 40. The pressure plate 70 is configured to be able to push the input-side rotary plates 20 and the output-side rotary plates 22. The pressure plate 70 is disposed concentrically with the clutch center 40 and the clutch housing 30. The pressure plate 70 includes a body 72 and a flange 98 connected to an outer peripheral edge of the body 72, which is located in the second direction D2, and extending radially outward. The body 72 protrudes in the first direction D1 relative to the flange 98. The pressure plate 70 holds the output-side rotary plates 22 disposed alternately with the input-side rotary plates 20.

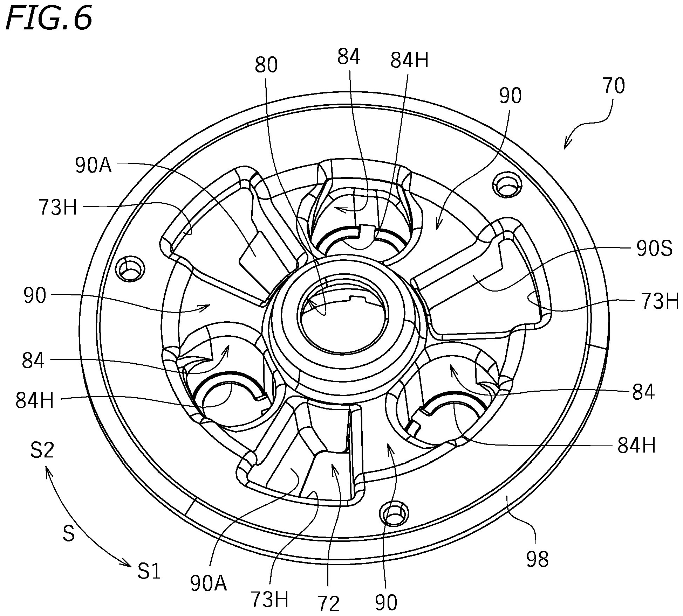

As illustrated in FIG. 4, the body 72 includes a tubular portion 80, the pressure-side cam portions 90, the pressure-side fitting portion 88, and spring housing portions 84 (see also FIG. 6).

The tubular portion 80 has a cylindrical shape. The tubular portion 80 is integral with the pressure-side cam portions 90. The tubular portion 80 houses the extremity 15T (see FIG. 1) of the output shaft 15. The release bearing 18 (see FIG. 1) is housed in the tubular portion 80. The tubular portion 80 is a region to receive a pushing force from the push member 16B. The tubular portion 80 is a region to receive clutch oil that has flowed out of the extremity 15T of the output shaft 15.

The pressure-side cam portions 90 are each in the shape of a block with cam surfaces that are inclined surfaces included in an assist & slipper (registered trademark) mechanism that slides relative to the center-side cam portions 60 so as to produce an assist torque or a slipper torque. The pressure-side cam portions 90 are provided so as to be protruded in the first direction D1 relative to the flange 98. As illustrated in FIG. 5, the pressure-side cam portions 90 are disposed at equal intervals in the circumferential direction S of the pressure plate 70. In the present embodiment, the number of pressure-side cam portions 90 included in the pressure plate 70 is three. The number of pressure-side cam portions 90, however, is not limited to three.

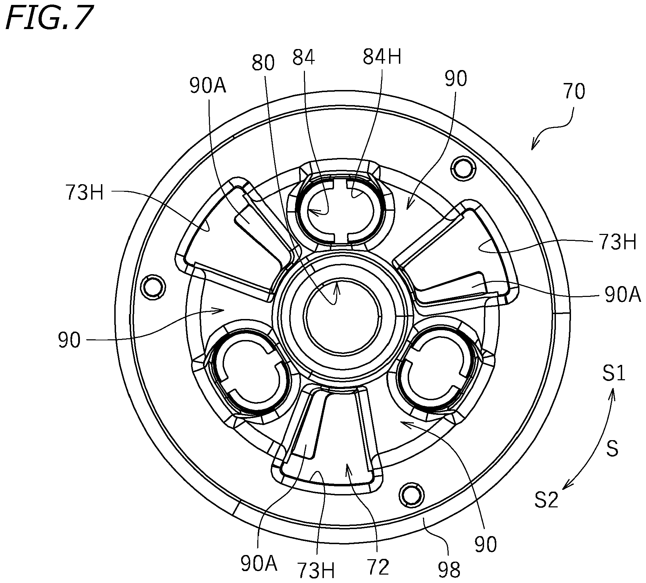

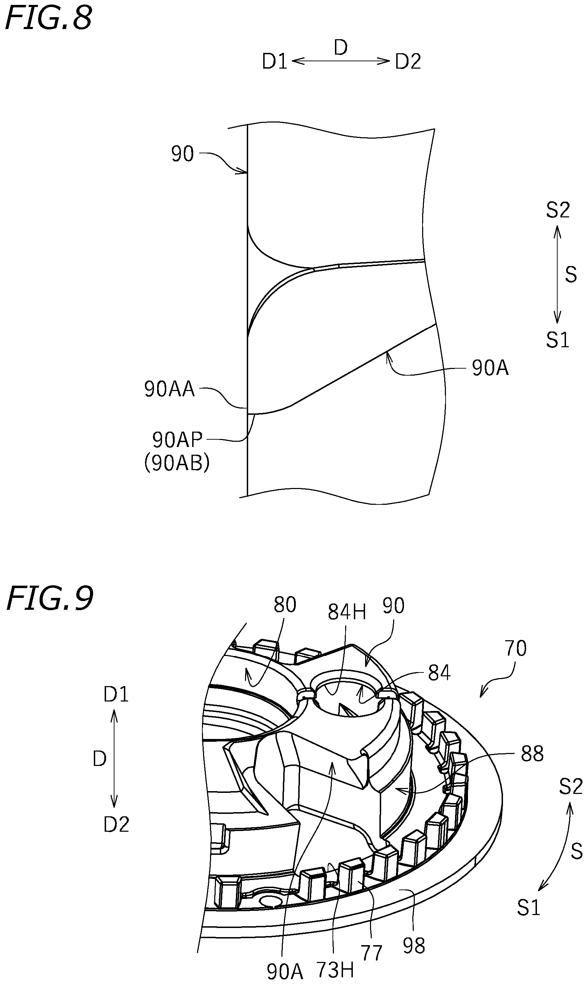

As illustrated in FIG. 5, the pressure-side cam portions 90 are located radially outward of the tubular portion 80. The pressure-side cam portions 90 include pressure-side assist cam surfaces 90A (see also FIGS. 7 and 9), pressure-side slipper cam surfaces 90S, and pressure-side top surfaces 90C. The pressure-side assist cam surfaces 90A are configured to be able to come into contact with the center-side assist cam surfaces 60A. The pressure-side assist cam surfaces 90A are configured to, upon being rotated relative to the clutch center 40, produce a force in a direction in which the pressure plate 70 is moved toward the clutch center 40 in order to increase the pushing force (or pressing force) for the input-side rotary plates 20 and the output-side rotary plates 22. The pressure-side slipper cam surfaces 90S are configured to be able to come into contact with the center-side slipper cam surfaces 60S. The pressure-side slipper cam surfaces 90S are configured to, upon being rotated relative to the clutch center 40, move the pressure plate 70 away from the clutch center 40 in order to reduce the pushing force (or pressing force) for the input-side rotary plates 20 and the output-side rotary plates 22. The pressure-side assist cam surface 90A of a first pressure-side cam portion 90L, which is one of the pressure-side cam portions 90 adjacent to each other in the circumferential direction S, and the pressure-side slipper cam surface 90S of a second pressure-side cam portion 90M, which is another one of the pressure-side cam portions 90 adjacent to each other in the circumferential direction S, are disposed to face each other in the circumferential direction S. The pressure-side top surfaces 90C are located between the pressure-side assist cam surfaces 90A and the pressure-side slipper cam surfaces 90S. More specifically, the pressure-side top surfaces 90C are located between the pressure-side assist cam surfaces 90A and the pressure-side slipper cam surfaces 90S in the circumferential direction S. The pressure-side top surfaces 90C are continuous with the pressure-side assist cam surfaces 90A and the pressure-side slipper cam surfaces 90S. Connections between the pressure-side top surfaces 90C and the pressure-side assist cam surfaces 90A and connections between the pressure-side top surfaces 90C and the pressure-side slipper cam surfaces 90S are curved surfaces.

As illustrated in FIG. 8, an end of the pressure-side assist cam surface 90A of each pressure-side cam portion 90 in the circumferential direction S is provided with a chamfered portion 90AP that has undergone linear chamfering. A corner of each chamfered portion 90AP (i.e., a corner thereof located in the first direction D1 and in the first circumferential direction S1) has a right angle. More specifically, the chamfered portion 90AP is provided on an end 90AB of each pressure-side assist cam surface 90A, which is located in the first circumferential direction S1.

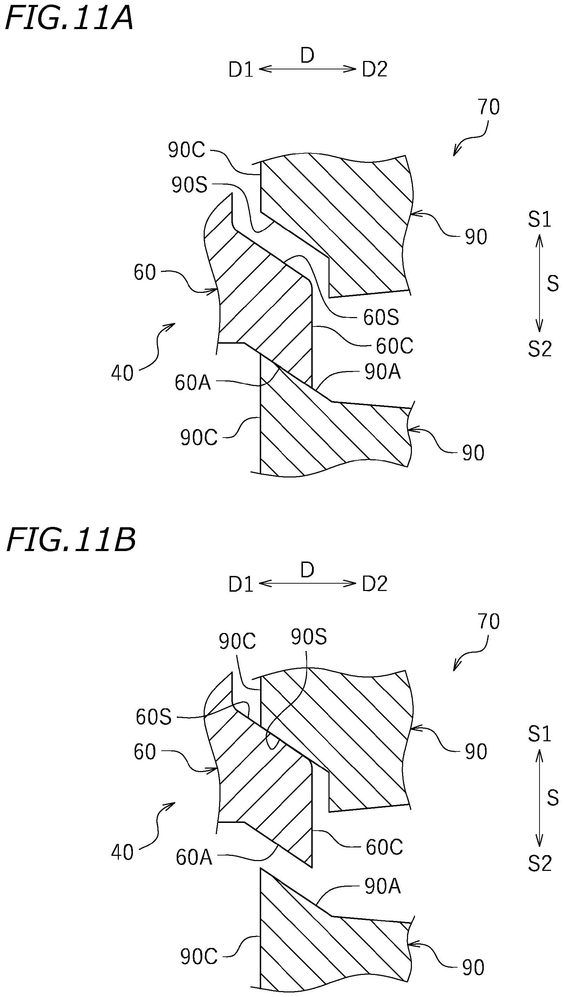

Actions of the center-side cam portions 60 and the pressure-side cam portions 90 will be described below. When the engine is increased in rotational speed such that a rotational driving force input to the input gear 35 and the clutch housing 30 is transmittable to the output shaft 15 through the clutch center 40, a rotational force is applied to the pressure plate 70 in the first circumferential direction S1 as illustrated in FIG. 11A. Thus, actions of the center-side assist cam surfaces 60A and the pressure-side assist cam surfaces 90A apply a force to the pressure plate 70 in the first direction D 1. This increases the pressing force for the input-side rotary plates 20 and the output-side rotary plates 22.

When the output shaft 15 is higher in rotational speed than the input gear 35 and the clutch housing 30 such that a back torque is produced, a rotational force is applied to the clutch center 40 in the first circumferential direction S1 as illustrated in FIG. 11B. Thus, actions of the center-side slipper cam surfaces 60S and the pressure-side slipper cam surfaces 90S move the pressure plate 70 in the second direction D2 so as to release the pressing force for the input-side rotary plates 20 and the output-side rotary plates 22. This makes it possible to prevent the engine and/or the transmission from encountering a malfunction caused by the back torque.

As illustrated in FIG. 4, the pressure-side fitting portion 88 is located radially outward of the pressure-side cam portions 90. The pressure-side fitting portion 88 is located in the second direction D2 relative to the pressure-side cam portions 90. The pressure-side fitting portion 88 is configured to be internally fitted to the center-side fitting portion 58 (see FIG. 2) so as to be slidable thereon.

As illustrated in FIGS. 4 and 5, the pressure plate 70 includes pressure-side cam holes 73H passing through portions of the body 72 and the flange 98. The pressure-side cam holes 73H are located radially outward of the tubular portion 80. The pressure-side cam holes 73H each extend radially outward of the pressure-side fitting portion 88 from a position laterally of the tubular portion 80. The pressure-side cam holes 73H are provided between the pressure-side assist cam surfaces 90A and the pressure-side slipper cam surfaces 90S of the pressure-side cam portions 90 adjacent to each other. As illustrated in FIGS. 5 and 7, the pressure-side assist cam surfaces 90A and portions of the pressure-side cam holes 73H overlap with each other as viewed in the axial direction of the pressure plate 70.

As illustrated in FIG. 4, the pressure plate 70 includes the pressure-side fitting teeth 77 disposed on the flange 98. The pressure-side fitting teeth 77 hold the output-side rotary plates 22. The pressure-side fitting teeth 77 protrude in the first direction D1 from the flange 98. The pressure-side fitting teeth 77 are located radially outward of the tubular portion 80. The pressure-side fitting teeth 77 are located radially outward of the pressure-side cam portions 90. The pressure-side fitting teeth 77 are located radially outward of the pressure-side fitting portion 88. The pressure-side fitting teeth 77 are arranged in the circumferential direction S. The pressure-side fitting teeth 77 are disposed at equal intervals in the circumferential direction S. In the present embodiment, not all of the pressure-side fitting teeth 77 are disposed at equal intervals, but some of the pressure-side fitting teeth 77 are disposed at larger intervals than the other pressure-side fitting teeth 77 adjacent to each other and disposed at equal intervals.

As illustrated in FIGS. 6 and 7, the spring housing portions 84 are provided in the pressure-side cam portions 90. The spring housing portions 84 are recessed in the first direction D1 from the second direction D2. The spring housing portions 84 each have an elliptic shape. The spring housing portions 84 house pressure springs 25 (see FIG. 1). The spring housing portions 84 are provided with insertion holes 84H which pass therethrough and into which the bosses 54 (see FIG. 2) are inserted. In other words, the insertion holes 84H pass through the pressure-side cam portions 90. The insertion holes 84H each have an elliptic shape.

As illustrated in FIG. 1, the pressure springs 25 are housed in the spring housing portions 84. The pressure springs 25 are externally fitted to the bosses 54 inserted into the insertion holes 84H of the spring housing portions 84. The pressure springs 25 urge the pressure plate 70 toward the clutch center 40 (i.e., in the first direction D1). The pressure springs 25 are, for example, coil springs provided by spirally winding spring steel.

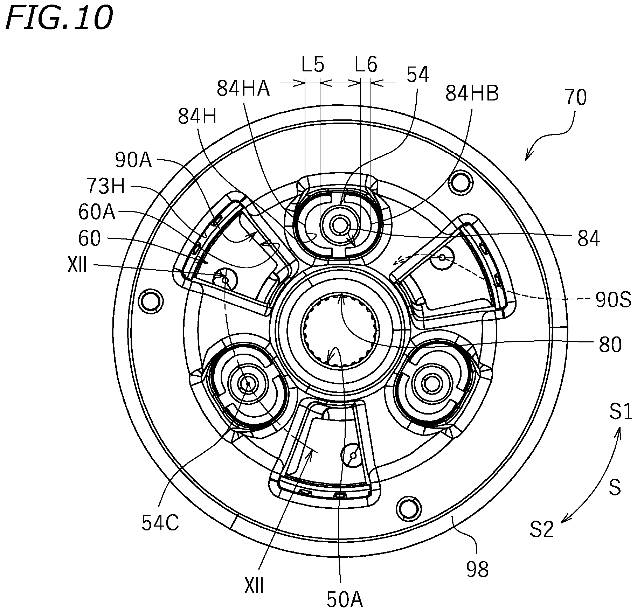

FIG. 10 is a plan view of the clutch center 40 and the pressure plate 70 in an assembled state. In the state illustrated in FIG. 10, the pressure-side assist cam surfaces 90A and the center-side assist cam surfaces 60A are out of contact with each other, and the pressure-side slipper cam surfaces 90S and the center-side slipper cam surfaces 60S are out of contact with each other. In this state, the pressure plate 70 is at its closest position to the clutch center 40. As illustrated in FIG. 10, within an entire range in the circumferential direction S from locations where the pressure-side slipper cam surfaces 90S and the center-side slipper cam surfaces 60S are immediately before coming into contact with each other to locations where the pressure-side assist cam surfaces 90A and the center-side assist cam surfaces 60A are immediately before coming into contact with each other, a distance L5 in the circumferential direction S between each boss 54 and an end 84HA of the associated insertion hole 84H, which is located adjacent to the associated pressure-side assist cam surface 90A (i.e., located in the first circumferential direction S1), is longer than a distance L6 in the circumferential direction S between each boss 54 and an end 84HB of the associated insertion hole 84H, which is located adjacent to the associated pressure-side slipper cam surface 90S (i.e., located in the second circumferential direction S2). The distance L5 is always longer than the distance L6 when the pressure-side slipper cam surfaces 90S and the center-side slipper cam surfaces 60S are out of contact with each other, and the pressure-side assist cam surfaces 90A and the center-side assist cam surfaces 60A are out of contact with each other, with the pressure plate 70 at its closest position to the clutch center 40. As used herein, the phrase "entire range in the circumferential direction S from locations where the pressure-side slipper cam surfaces 90S and the center-side slipper cam surfaces 60S are immediately before coming into contact with each other to locations where the pressure-side assist cam surfaces 90A and the center-side assist cam surfaces 60A are immediately before coming into contact with each other" refers to a range determined by removing locations where the pressure-side slipper cam surfaces 90S and the center-side slipper cam surfaces 60S are in contact with each other and locations where the pressure-side assist cam surfaces 90A and the center-side assist cam surfaces 60A are in contact with each other from a range in the circumferential direction S from the locations where the pressure-side slipper cam surfaces 90S and the center-side slipper cam surfaces 60S are in contact with each other and the locations where the pressure-side assist cam surfaces 90A and the center-side assist cam surfaces 60A are in contact with each other.

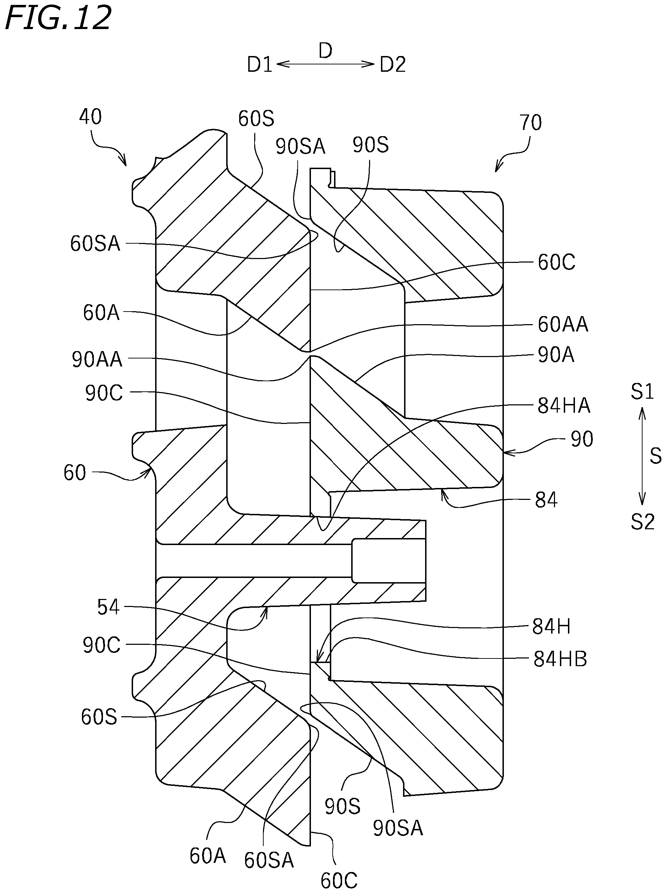

FIG. 12 is a partially enlarged cross-sectional view of the pressure plate 70 and the clutch center 40. FIG. 12 is a cross-sectional view taken along the line XII-XII of FIG. 10. Specifically, FIG. 12 is a cross-sectional view taken along a plane passing through an axis 54C of the boss 54 and extending in the circumferential direction S and the axial direction of the output shaft 15. As illustrated in FIG. 12, with the center-side top surface 60C and the pressure-side top surface 90C being located at corresponding positions in the direction D and with an end 60AA of the center-side assist cam surface 60A, which is located in the second direction D2, facing an end 90AA of the pressure-side assist cam surface 90A, which is located in the first direction D1, an end 90SA of the pressure-side slipper cam surface 90S, which is located in the first direction D1, is located in the first circumferential direction S1 relative to an end 60SA of the center-side slipper cam surface 60S, which is located in the second direction D2. The end 60SA and the end 90SA have a clearance therebetween in the circumferential direction S. With the center-side top surface 60C and the pressure-side top surface 90C being located at corresponding positions in the direction D and with the end 84HA of the insertion hole 84H adjacent to the pressure-side assist cam surface 90A being in contact with the boss 54, the end 60AA of the center-side assist cam surface 60A, which is located in the second direction D2, is located in the first circumferential direction S 1 relative to the end 90AA of the pressure-side assist cam surface 90A, which is located in the first direction D1. The end 60AA and the end 90AA have a clearance therebetween in the circumferential direction S. The phrase "center-side top surface 60C and the pressure-side top surface 90C being located at corresponding positions in the direction D" refers to the center-side top surface 60C and the pressure-side top surface 90C being located in contact with each other when the center-side top surface 60C and the pressure-side top surface 90C are located at corresponding positions in the circumferential direction S.

As illustrated FIG. 1, the stopper plate 100 is provided so as to be able to come into contact with the pressure plate 70. The stopper plate 100 is a component to prevent the pressure plate 70 from moving away from the clutch center 40 in the second direction D2 by a predetermined distance or more. The stopper plate 100 is secured to the bosses 54 of the clutch center 40 with the bolts 28. With the bosses 54 of the clutch center 40 and the pressure springs 25 being disposed in the spring housing portions 84 of the pressure plate 70, the bolts 28 are tightened and secured into the bosses 54 through the stopper plate 100. The stopper plate 100 has a substantially triangular shape in a plan view.

When the pressure plate 70 is in contact with the stopper plate 100, the area of contact between the pressure-side slipper cam surfaces 90S and the center-side slipper cam surfaces 60S corresponds to 50% to 90% (inclusive) of the area of the pressure-side slipper cam surfaces 90S and 50% to 90% (inclusive) of the area of the center-side slipper cam surfaces 60S. When the pressure plate 70 is in contact with the stopper plate 100, the pressure springs 25 are located away from side walls of the spring housing portions 84. This means that the pressure springs 25 are not located between the bosses 54 and the spring housing portions 84, which prevents application of excessive stress to the bosses 54.

A length L1 (see FIG. 5) in the circumferential direction S between the end 90AA (which is located in the first direction D1) of the pressure-side assist cam surface 90A (which is located in the first circumferential direction S 1) of the first pressure-side cam portion 90L (which is included in the pressure-side cam portions 90 adjacent to each other in the circumferential direction S) and the end 90SA (which is located in the first direction D1) of the pressure-side slipper cam surface 90S (which is located in the second circumferential direction S2) of the second pressure-side cam portion 90M (which is included in the pressure-side cam portions 90 adjacent to each other in the circumferential direction S) is longer than a length L2 (see FIG. 3) in the circumferential direction between the end 60AA (which is located in the second direction D2) of the center-side assist cam surface 60A of an associated one of the center-side cam portions 60 and the end 60SA (which is located in the second direction D2) of the center-side slipper cam surface 60S of the associated center-side cam portion 60.

As viewed in the axial direction of the output shaft 15, an angle θ1 (see FIG. 5) formed with respect to a center of the pressure plate 70 (which corresponds to a center 80C of the tubular portion 80 in this embodiment) and between the end 90AB (which is located in the first circumferential direction S 1) of the pressure-side assist cam surface 90A (which is located in the first circumferential direction S1) of the first pressure-side cam portion 90L (which is included in the pressure-side cam portions 90 adjacent to each other in the circumferential direction S) and an end 90SB (which is located in the first circumferential direction S1) of the pressure-side slipper cam surface 90S (which is located in the second circumferential direction S2) of the second pressure-side cam portion 90M (which is included in the pressure-side cam portions 90 adjacent to each other in the circumferential direction S) is greater than an angle θ2 (see FIG. 3) formed with respect to a center 50C of the output shaft holder 50 and between an end 60AB (which is located in the second circumferential direction S2) of the center-side assist cam surface 60A of an associated one of the center-side cam portions 60 and an end 60SB (which is located in the second circumferential direction S2) of the center-side slipper cam surface 60S of the associated center-side cam portion 60. The angle θ1 is an angle formed between a straight line passing through the center 80C of the tubular portion 80 and the end 90AB and a straight line passing through the center 80C and the end 90SB. The angle θ2 is an angle formed between a straight line passing through the center 50C of the output shaft holder 50 and the end 60AB and a straight line passing through the center 50C and the end 60SB.

A length L3 (see FIG. 3) in the circumferential direction S between the end 60AA (which is located in the second direction D2) of the center-side assist cam surface 60A and the boss 54 is longer than a length L4 (see FIG. 5) in the circumferential direction S between the end 90AA (which is located in the first direction D1) of the pressure-side assist cam surface 90A and the insertion hole 84H.

As viewed in the axial direction of the output shaft 15, an angle θ3 (see FIG. 3) formed with respect to the center 50C of the output shaft holder 50 and between the end 60AB (which is located in the second circumferential direction S2) of the center-side assist cam surface 60A of the center-side cam portion 60 and the axis 54C of the boss 54 is greater than an angle θ4 (see FIG. 5) formed with respect to the center of the pressure plate 70 (which corresponds to the center 80C of the tubular portion 80 in this embodiment) and between the end 90AB (which is located in the first circumferential direction S 1) of the pressure-side assist cam surface 90A and a center 84HC of the insertion hole 84H. The angle θ3 is an angle formed between a straight line passing through the center 50C of the output shaft holder 50 and the end 60AB and a straight line passing through the center 50C and the axis 54C of the boss 54. The angle θ4 is an angle formed between a straight line passing through the center 80C of the tubular portion 80 and the end 90AB and a straight line passing through the center 80C and the center 84HC of the insertion hole 84H.

The inside of the clutch apparatus 10 is filled with a predetermined amount of clutch oil. The clutch oil flows into the clutch center 40 and the pressure plate 70 through the hollow portion 15H of the output shaft 15 and is then supplied to the input-side rotary plates 20 and the output-side rotary plates 22 through the clearance between the center-side fitting portion 58 and the pressure-side fitting portion 88 and the oil discharge holes 49. The clutch oil prevents heat absorption and/or wearing of the friction materials. The clutch apparatus 10 according to the present embodiment is a "wet multiplate friction clutch apparatus".

The following description discusses operations of the clutch apparatus 10 according to the present embodiment. As previously mentioned, the clutch apparatus 10 is disposed between the engine and the transmission of the motorcycle. Operations performed on the clutch operation lever by a driver transmit the rotational driving force of the engine to the transmission and cut off the rotational driving force.

When the clutch operation lever is not being operated by the driver of the motorcycle, a clutch release mechanism (not illustrated) of the clutch apparatus 10 does not push the push rod 16A, so that the pressure plate 70 pushes the input-side rotary plates 20 with an urging force (or elastic force) of the pressure springs 25. This brings the clutch center 40 to a clutch ON state in which the input-side rotary plates 20 and the output-side rotary plates 22 are pushed against each other and frictionally connected to each other, with the result that the clutch center 40 is rotationally driven. In this case, the rotational driving force of the engine is transmitted to the clutch center 40 so as to rotationally drive the output shaft 15.

In the clutch ON state, clutch oil that has flowed through the hollow portion H of the output shaft 15 and flowed out of the extremity 15T of the output shaft 15 falls down inside the tubular portion 80 or flies up and adheres to the inside of the tubular portion 80 (see arrows F in FIG. 1). The clutch oil adhering to the inside of the tubular portion 80 is guided into the clutch center 40. The clutch oil thus flows out of the clutch center 40 through the oil discharge holes 49. The clutch oil also flows out of the clutch center 40 through the clearance between the center-side fitting portion 58 and the pressure-side fitting portion 88. The clutch oil that has flowed out of the clutch center 40 is supplied to the input-side rotary plates 20 and the output-side rotary plates 22.

When the clutch operation lever is operated by the driver of the motorcycle in the clutch ON state, the clutch release mechanism (not illustrated) of the clutch apparatus 10 pushes the push rod 16A, so that the pressure plate 70 is moved in a direction away from the clutch center 40 (i.e., in the second direction D2) against the urging force of the pressure springs 25. This brings the clutch center 40 to a clutch OFF state in which the input-side rotary plates 20 and the output-side rotary plates 22 are released from being frictionally connected to each other, with the result that rotational driving of the clutch center 40 is damped or stopped. In this case, transmission of the rotational driving force of the engine to the clutch center 40 is cut off.

In the clutch OFF state, clutch oil that has flowed through the hollow portion H of the output shaft 15 and flowed out of the extremity 15T of the output shaft 15 is guided into the clutch center 40 as in the clutch ON state. In this case, the pressure plate 70 moves away from the clutch center 40, which reduces the area where the center-side fitting portion 58 and the pressure-side fitting portion 88 are fitted to each other. As a result, clutch oil inside the tubular portion 80 flows out of the clutch center 40 more proactively and flows to each region inside the clutch apparatus 10. Clutch oil is proactively guidable to, in particular, gaps between the input-side rotary plates 20 and the output-side rotary plates 22 located away from each other.

Upon releasing of the clutch operation lever by the driver in the clutch OFF state, the pressure plate 70 is released from being pushed by the clutch release mechanism (not illustrated) through the push member 16B. This causes the pressure plate 70 to move in a direction toward the clutch center 40 (i.e., the first direction D1) with the urging force of the pressure springs 25.

In the clutch apparatus 10 according to the present embodiment, the length L1 in the circumferential direction S between the end 90AA (which is located in the first direction D 1 or located toward the clutch center 40) of the pressure-side assist cam surface 90A of the first pressure-side cam portion 90L (which is included in the pressure-side cam portions 90 adjacent to each other in the circumferential direction S) and the end 90SA (which is located in the first direction D1 or located toward the clutch center 40) of the pressure-side slipper cam surface 90S of the second pressure-side cam portion 90M (which is included in the pressure-side cam portions 90 adjacent to each other in the circumferential direction S) is, as described above, longer than the length L2 in the circumferential direction S between the end 60AA (which is located in the second direction D2 or located toward the pressure plate 70) of the center-side assist cam surface 60A of an associated one of the center-side cam portions 60 and the end 60SA (which is located in the second direction D2 or located toward the pressure plate 70) of the center-side slipper cam surface 60S of the associated center-side cam portion 60. The above-described embodiment makes it possible to prevent interference of the pressure-side assist cam surfaces 90A and the center-side assist cam surfaces 60A with each other and interference of the pressure-side slipper cam surfaces 90S and the center-side slipper cam surfaces 60S with each other in assembling the pressure plate 70 to the clutch center 40, and thus makes it possible to facilitate assembling the pressure plate 70 and the clutch center 40 to each other. Within the entire range in the circumferential direction S from the locations where the pressure-side slipper cam surfaces 90S and the center-side slipper cam surfaces 60S are immediately before coming into contact with each other to the locations where the pressure-side assist cam surfaces 90A and the center-side assist cam surfaces 60A are immediately before coming into contact with each other, the distance L5 in the circumferential direction S between each boss 54 and the end 84HA of the associated insertion hole 84H, which is located adjacent to the associated pressure-side assist cam surface 90A, is longer than the distance L6 in the circumferential direction S between each boss 54 and the end 84HB of the associated insertion hole 84H, which is located adjacent to the associated pressure-side slipper cam surface 90S. The above-described embodiment enables the pressure plate 70 to be away from the clutch center 40 by a sufficient distance while preventing contact between the bosses 54 and the spring housing portions 84.

The clutch apparatus 10 according to the present embodiment includes the stopper plate 100 provided so as to be able to come into contact with the pressure plate 70 and configured to prevent the pressure plate 70 from moving away from the clutch center 40 in the second direction D2 by the predetermined distance or more. When the pressure plate 70 is in contact with the stopper plate 100, the pressure springs 25 are located away from the side walls of the spring housing portions 84. In the above-described embodiment, the stopper plate 100 restrains movement of the pressure plate 70, with the result that no excessive stress is applied to the pressure springs 25 and the bosses 54 when the pressure plate 70 is in contact with the stopper plate 100.

In the clutch apparatus 10 according to the present embodiment, as viewed in the axial direction of the output shaft 15, the angle θ1 formed between the straight line passing through the center of the pressure plate 70 (which corresponds to the center 80C of the tubular portion 80 in this embodiment) and passing through the end 90AB (which is located in the first circumferential direction S1) of the pressure-side slipper cam surface 90S (which is located in the first circumferential direction S1) of the pressure-side cam portion 90L and the center of the pressure plate 70 (which corresponds to the center 80C of the tubular portion 80 in this embodiment) and the end 90SB (which is located in the first circumferential direction S1) of the pressure-side slipper cam surface 90S (which is located in the second circumferential direction S2) of the pressure-side cam portion 90M is greater than the angle θ2 formed between the straight line passing through the center 50C of the output shaft holder 50 and passing through the end 60AB (which is located in the second circumferential direction S2) of the center-side assist cam surface 60A of an associated one of the center-side cam portions 60 and the straight line passing through the center 50C of the output shaft holder 50 and passing through the end 60SB (which is located in the second circumferential direction S2) of the center-side slipper cam surface 60S of the associated center-side cam portion 60. The above-described embodiment makes it possible to prevent interference of the pressure-side assist cam surfaces 90A and the center-side assist cam surfaces 60A with each other and interference of the pressure-side slipper cam surfaces 90S and the center-side slipper cam surfaces 60S with each other in assembling the pressure plate 70 to the clutch center 40.

In the clutch apparatus 10 according to the present embodiment, the length L3 in the circumferential direction S between the end 60AA (which is located in the second direction D2) of the center-side assist cam surface 60A and the boss 54 is longer than the length L4 in the circumferential direction S between the end 90AA (which is located in the first direction D1) of the pressure-side assist cam surface 90A and the insertion hole 84H. The above-described embodiment makes it possible to, during assembly of the pressure plate 70 to the clutch center 40, prevent interference of the pressure-side assist cam surfaces 90A and the center-side assist cam surfaces 60A with each other and interference of the pressure-side slipper cam surfaces 90S and the center-side slipper cam surfaces 60S with each other while inserting the bosses 54 into the insertion holes 84H.

In the clutch apparatus 10 according to the present embodiment, as viewed in the axial direction of the output shaft 15, the angle θ3 formed between the straight line passing through the center 50C of the output shaft holder 50 and passing through the end 60AB (which is located in the second circumferential direction S2) of the center-side assist cam surface 60A and the straight line passing through the center 50C of the output shaft holder 50 and the axis 54C of the boss 54 is greater than the angle θ4 formed between the straight line passing through the center of the pressure plate 70 (which corresponds to the center 80C of the tubular portion 80 in this embodiment) and passing through the end 90AB (which is located in the first circumferential direction S1) of the pressure-side assist cam surface 90A and the straight line passing through the center of the pressure plate 70 and the center 84HC of the insertion hole 84H. The above-described embodiment makes it possible to, during assembly of the pressure plate 70 to the clutch center 40, prevent interference of the pressure-side assist cam surfaces 90A and the center-side assist cam surfaces 60A with each other and interference of the pressure-side slipper cam surfaces 90S and the center-side slipper cam surfaces 60S with each other while inserting the bosses 54 into the insertion holes 84H.

### Second Embodiment

FIG. 13 is a partially enlarged cross-sectional view of a pressure plate 70 and a clutch center 40 according to a second embodiment. FIG. 13 is equivalent to a cross-sectional view taken along a plane passing through an axis 54C of a boss 54 and extending in a circumferential direction S and an axial direction of an output shaft 15. As illustrated in FIG. 13, the pressure plate 70 includes spring sheets 85 each of which has a ring shape and which are housed in spring housing portions 84. As used herein, the term "ring shape" includes, for example, an O shape (i.e., an O-ring) and a C shape (i.e., a C-ring). The spring sheets 85 are elliptical in shape. The spring sheets 85 are disposed to be movable in the circumferential direction S within the spring housing portions 84. In the example illustrated in FIG. 13, the spring sheets 85 are located farthest in a second circumferential direction S2 in the spring housing portions 84. Ends 85A of the spring sheets 85, which are located in the second circumferential direction S2, are thus in contact with inner walls 84A of the spring housing portions 84. The bosses 54 pass through the spring sheets 85. Pressure springs 25 are disposed on surfaces 85M of the spring sheets 85, which are located in a second direction D2. Boundary planes 54HH between first threaded holes 54HA and second threaded holes 54HB of threaded holes 54H are located in the second direction D2 relative to the spring sheets 85. In assembling the pressure plate 70 to the clutch center 40, this embodiment involves bringing the spring sheets 85 or ends (i.e., ends 84HA or ends 84HB) of the insertion holes 84H into contact with the bosses 54 upon movement of the pressure plate 70 in the circumferential direction S. Because the boundary planes 54HH are located in the second direction D2 relative to the spring sheets 85, the spring sheets 85 or the ends of the insertion holes 84H come into contact with relatively thick portions of the bosses 54. This makes it possible to assemble the pressure plate 70 to the clutch center 40 while preventing or reducing damage to the bosses 54.

As illustrated in FIG. 13, with center-side top surfaces 60C and pressure-side top surfaces 90C being located at corresponding positions in a direction D, a total length of a first length LS1 and a second length LS2 is longer than a third length LS3. In other words, the following expression holds: (LS1 + LS2) > LS3. In this embodiment, the first length LS1 is a distance in the circumferential direction S between an end 60AA of a center-side assist cam surface 60A, which is located in the second direction D2, and an end 90AA of a pressure-side assist cam surface 90A, which is located in a first direction D 1. The second length LS2 is a distance in the circumferential direction S between an end 60SA of a center-side slipper cam surface 60S, which is located in the second direction D2, and an end 90SA of a pressure-side slipper cam surface 90S, which is located in the first direction D1. With the spring sheets 85 being located farthest in the second circumferential direction S2 within the spring housing portions 84, with a first inner edge 85HA, which is an inner edge of each spring sheet 85 located in a first circumferential direction S1, being in contact with the associated boss 54, and with the end 84HA, which is an inner edge of each insertion hole 84H located in the first circumferential direction S1, being out of contact with the associated boss 54, the third length LS3 is a distance in the circumferential direction S between the first inner edge 85HA and the end 84HA. The end 84HA is an example of a first inner edge. Assume that, as illustrated in FIG. 13, each center-side top surface 60C and the associated pressure-side top surface 90C are located at corresponding positions in the direction D, the end 60AA (which is located in the second direction D2) of each center-side assist cam surface 60A faces the end 90AA (which is located in the first direction D 1) of the associated pressure-side assist cam surface 90A in the circumferential direction S, and the end 85A (which is located in the second circumferential direction S2) of each spring sheet 85 is in abutment with an end 84AA (which is located in the second circumferential direction S2) of the associated spring housing portion 84. In this state, each boss 54 is disposed through the associated insertion hole 84H and the associated spring sheet 85, the end 90AA (which is located in the first direction D1) of each pressure-side assist cam surface 60A is located in the second circumferential direction S2 relative to the end 60AA (which is located in the second direction D2) of the associated center-side assist cam surface 60A, and the end 90SA (which is located in the first direction D1) of each pressure-side slipper cam surface 90S is located in the first circumferential direction S 1 relative to the end 60SA (which is located in the second direction D2) of the associated center-side slipper cam surface 60S.

### Third Embodiment

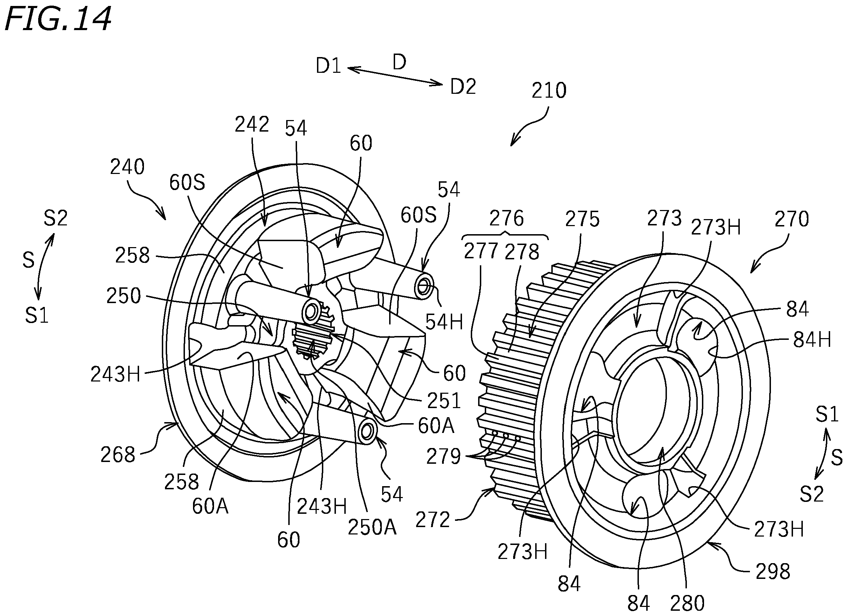

FIG. 14 is an exploded perspective view of a clutch center 240 and a pressure plate 270 of a clutch apparatus 210 according to a third embodiment.

The clutch center 240 is housed in a clutch housing 30 (see FIG. 1). The clutch center 240 is disposed concentrically with the clutch housing 30. As illustrated in FIG. 14, the clutch center 240 includes a body 242 and a flange 268 connected to an outer peripheral edge of the body 242, which is located in a first direction D1, and extending radially outward. The body 242 protrudes in a second direction D2 relative to the flange 268. The clutch center 240 does not hold output-side rotary plates 22. The clutch center 240 is rotationally driven together with an output shaft 15 (see FIG. 1).

As illustrated in FIG. 14, the body 242 includes an output shaft holder 250, center-side cam portions 60, and a center-side fitting portion 258. The center-side cam portions 60 are provided so as to be protruded in the second direction D2 relative to the flange 268. The center-side cam portions 60 are located radially outward of the output shaft holder 250.

The output shaft holder 250 has a cylindrical shape. The output shaft holder 250 is provided with an insertion hole 251 into which the output shaft 15 (see FIG. 1) is inserted and spline-fitted. The insertion hole 251 is provided through the body 242. An inner peripheral surface 250A of the output shaft holder 250, which defines the insertion hole 251, is provided with spline grooves extending in its axial direction. The output shaft 15 is connected to the output shaft holder 250.

As illustrated in FIG. 14, the clutch center 240 includes bosses 54 (the number of which is three in the present embodiment). The bosses 54 are located radially outward of the output shaft holder 250. The bosses 54 are provided on the body 242.

As illustrated in FIG. 14, the clutch center 240 includes center-side cam holes 243H passing through portions of the body 242 and the flange 268. The center-side cam holes 243H pass through the body 242 and the flange 268 in a direction D. The center-side cam holes 243H each extend to the flange 268 from a position laterally of the output shaft holder 250. The center-side cam holes 243H are provided between center-side assist cam surfaces 60A of the center-side cam portions 60 and the bosses 54. As viewed in an axial direction of the clutch center 240, the center-side assist cam surfaces 60A and portions of the center-side cam holes 243H overlap with each other.

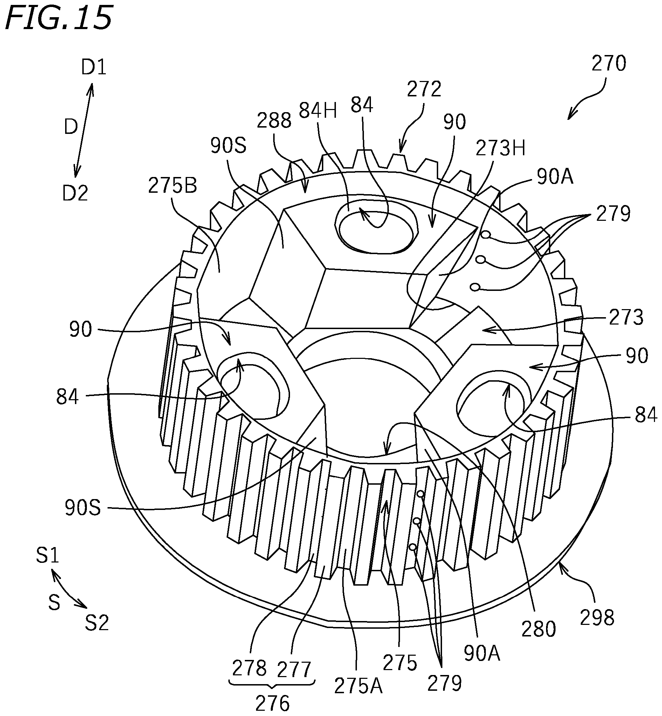

As illustrated in FIG. 14, the center-side fitting portion 258 is provided on the body 242. The center-side fitting portion 258 is located radially outward of the center-side cam portions 60. The center-side fitting portion 258 is located in the first direction D1 relative to the center-side cam portions 60. The center-side fitting portion 258 is configured to be internally fitted to a pressure-side fitting portion 288 (see FIG. 15) so as to be slidable thereon.

The pressure plate 270 is provided so as to be movable toward or away from the clutch center 240 and rotatable relative to the clutch center 240. The pressure plate 270 is configured to be able to push input-side rotary plates 20 and the output-side rotary plates 22. The pressure plate 270 is disposed concentrically with the clutch center 240 and the clutch housing 30. The pressure plate 270 includes a cylindrical body 272 and a flange 298 extending radially outward from an outer peripheral edge of the body 272. The pressure plate 270 holds the output-side rotary plates 22 disposed alternately with the input-side rotary plates 20 in the direction D.

As illustrated in FIG. 15, the body 272 includes: an annular base wall 273; an outer peripheral wall 275 located radially outward of the base wall 273 and extending in the first direction D1; a tubular portion 280 provided in a center of the base wall 273; pressure-side cam portions 90 connected to the base wall 273 and the outer peripheral wall 275; the pressure-side fitting portion 288; and spring housing portions 84 (see FIG. 14). The pressure-side cam portions 90 are provided so as to be protruded in the first direction D1 from the body 272. The pressure-side cam portions 90 are located radially outward of the tubular portion 280. The pressure-side cam portions 90 are located radially inward of the outer peripheral wall 275.

The tubular portion 280 has a cylindrical shape. The tubular portion 280 is integral with the pressure-side cam portions 90. The tubular portion 280 houses an extremity 15T (see FIG. 1) of the output shaft 15. A release bearing 18 (see FIG. 1) is housed in the tubular portion 280. The tubular portion 280 is a region to receive a pushing force from a push member 16B. The tubular portion 280 is a region to receive clutch oil that has flowed out of the extremity 15T of the output shaft 15.

As illustrated in FIG. 15, the outer peripheral wall 275 of the pressure plate 270 is disposed radially outward of the tubular portion 280. The outer peripheral wall 275 has an annular shape extending in the direction D. An outer peripheral surface 275A of the outer peripheral wall 275 is provided with a spline-fitting portion 276. The spline-fitting portion 276 includes: pressure-side fitting teeth 277 extending in an axial direction of the pressure plate 270 along the outer peripheral surface 275A of the outer peripheral wall 275; spline grooves 278 provided between adjacent ones of the pressure-side fitting teeth 277 and extending in the axial direction of the pressure plate 270; and oil discharge holes 279. The pressure-side fitting teeth 277 hold the output-side rotary plates 22. The pressure-side fitting teeth 277 are arranged in a circumferential direction S. The pressure-side fitting teeth 277 are provided at equal intervals in the circumferential direction S. The pressure-side fitting teeth 277 are similar in shape. The pressure-side fitting teeth 277 protrude radially outward from the outer peripheral surface 275A of the outer peripheral wall 275. The oil discharge holes 279 are each provided radially through the outer peripheral wall 275. The oil discharge holes 279 are each provided between adjacent ones of the pressure-side fitting teeth 277. In other words, the oil discharge holes 279 are provided in the spline grooves 278. The oil discharge holes 279 are provided laterally of the pressure-side cam portions 90. The oil discharge holes 279 are provided laterally of pressure-side assist cam surfaces 90A of the pressure-side cam portions 90. The oil discharge holes 279 are provided in a first circumferential direction S1 relative to the pressure-side assist cam surfaces 90A. The oil discharge holes 279 are provided in a second circumferential direction S2 relative to pressure-side slipper cam surfaces 90S. In the present embodiment, three of the oil discharge holes 279 are provided at each of three locations situated on the outer peripheral wall 275 in the circumferential direction S. The oil discharge holes 279 are disposed at equal intervals in the circumferential direction S. The oil discharge holes 279 allow communication between inside and outside of the pressure plate 270. The oil discharge holes 279 are holes through which clutch oil that has flowed out of the output shaft 15 into the pressure plate 270 is to be discharged out of the pressure plate 270. In this embodiment, clutch oil flowing along an inner peripheral surface 275B of the outer peripheral wall 275 is discharged out of the pressure plate 270 through the oil discharge holes 279. At least portions of the oil discharge holes 279 are provided at positions facing the center-side fitting portion 258 (see FIG. 14).

The output-side rotary plates 22 are held by the spline-fitting portion 276 of the pressure plate 270. The output-side rotary plates 22 are held by the pressure-side fitting teeth 277 and the spline grooves 278 through spline-fitting. The output-side rotary plates 22 are provided so as to be movable in the axial direction of the pressure plate 270. The output-side rotary plates 22 are provided so as to be rotatable together with the pressure plate 270.

As illustrated in FIGS. 14 and 15, the pressure plate 270 includes pressure-side cam holes 273H each passing through a portion of the base wall 273. The pressure-side cam holes 273H pass through the base wall 273 in the direction D. The pressure-side cam holes 273H are located radially outward of the tubular portion 80. The pressure-side cam holes 273H each extend to the outer peripheral wall 275 from a position laterally of the tubular portion 80. The pressure-side cam holes 273H are provided through the base wall 273 between the pressure-side cam portions 90 adjacent to each other. The pressure-side cam holes 273H are provided through the base wall 273 between the pressure-side assist cam surfaces 90A and the pressure-side slipper cam surfaces 90S of the pressure-side cam portions 90 adjacent to each other. As viewed in the axial direction of the pressure plate 270, the pressure-side assist cam surfaces 90A and portions of the pressure-side cam holes 273H overlap with each other. Clutch oil flows into the pressure-side cam holes 273H from outside the pressure plate 270.

As illustrated in FIG. 15, the pressure-side fitting portion 288 is located radially outward of the tubular portion 280. The pressure-side fitting portion 288 is located radially outward of the pressure-side cam portions 90. The pressure-side fitting portion 288 is located in the first direction D1 relative to the pressure-side cam portions 90. The pressure-side fitting portion 288 is provided on the inner peripheral surface 275B of the outer peripheral wall 275. The pressure-side fitting portion 288 is configured to be externally fitted to the center-side fitting portion 258 (see FIG. 14) so as to be slidable thereon. The pressure-side fitting portion 288 and the center-side fitting portion 258 have a clearance therebetween.

Similarly to the clutch center 40 and the pressure plate 70 according to the first embodiment, the clutch center 240 and the pressure plate 270 according to the third embodiment are configured such that within an entire range in the circumferential direction S from locations where the pressure-side slipper cam surfaces 90S and center-side slipper cam surfaces 60S are immediately before coming into contact with each other to locations where the pressure-side assist cam surfaces 90A and the center-side assist cam surfaces 60A are immediately before coming into contact with each other, a distance L5 in the circumferential direction S between each boss 54 and an end 84HA of an associated insertion hole 84H, which is located adjacent to the associated pressure-side assist cam surface 90A, i.e., located in the first circumferential direction S 1, is longer than a distance L6 in the circumferential direction S between each boss 54 and an end 84HB of the associated insertion hole 84H, which is located adjacent to the associated pressure-side slipper cam surface 90S, i.e., located in the second circumferential direction S2 (see FIG. 10).

In the clutch apparatus 210 according to the present embodiment, a length L1 in the circumferential direction S between an end 90AA (which is located in the first direction D 1 or located toward the clutch center 240) of the pressure-side assist cam surface 90A of a first pressure-side cam portion 90L (which is included in the pressure-side cam portions 90 adjacent to each other in the circumferential direction S) and an end 90SA (which is located in the first direction D1 or located toward the clutch center 240) of the pressure-side slipper cam surface 90S of a second pressure-side cam portion 90M (which is included in the pressure-side cam portions 90 adjacent to each other in the circumferential direction S) is, as described above, longer than a length L2 in the circumferential direction S between an end 60AA (which is located in the second direction D2 or located toward the pressure plate 70) of the center-side assist cam surface 60A of an associated one of the center-side cam portions 60 and an end 60SA (which is located in the second direction D2 or located toward the pressure plate 270) of the center-side slipper cam surface 60S of the associated center-side cam portion 60. The above-described embodiment makes it possible to prevent interference of the pressure-side assist cam surfaces 90A and the center-side assist cam surfaces 60A with each other and interference of the pressure-side slipper cam surfaces 90S and the center-side slipper cam surfaces 60S with each other in assembling the pressure plate 270 to the clutch center 240, and thus makes it possible to facilitate assembling the pressure plate 270 and the clutch center 240 to each other. Within the entire range in the circumferential direction S from the locations where the pressure-side slipper cam surfaces 90S and the center-side slipper cam surfaces 60S are immediately before coming into contact with each other to the locations where the pressure-side assist cam surfaces 90A and the center-side assist cam surfaces 60A are immediately before coming into contact with each other, the distance L5 in the circumferential direction S between each boss 54 and the end 84HA of the associated insertion hole 84H, which is located adjacent to the associated pressure-side assist cam surface 90A, is longer than the distance L6 in the circumferential direction S between each boss 54 and the end 84HB of the associated insertion hole 84H, which is located adjacent to the associated pressure-side slipper cam surface 90S. The above-described embodiment enables the pressure plate 270 to be away from the clutch center 240 by a sufficient distance while preventing contact between the bosses 54 and the spring housing portions 84.

In the clutch apparatus 210 according to the present embodiment, the pressure plate 270 includes the pressure-side fitting teeth 277 holding the output-side rotary plates 22, and the output-side rotary plates 22 are held only by the pressure-side fitting teeth 277. The above-described embodiment makes it unnecessary for the clutch center 240 to hold the output-side rotary plates 22, enabling the clutch center 240 to have a simple structure.

The preferred embodiments of the present invention have been described thus far. Each of the foregoing embodiments, however, is only illustrative. The present invention may be embodied in various other forms.

In the third embodiment described above, the clutch center 240 is configured not to hold the output-side rotary plates 22. The clutch center 240, however, is not limited to this configuration. The clutch center 240 may include center-side fitting teeth similar in configuration to the pressure-side fitting teeth 77 according to the first embodiment, which are able to hold the output-side rotary plates 22.

### REFERENCE SIGNS LIST

- 10: clutch apparatus
- 15: output shaft
- 20: input-side rotary plate
- 22: output-side rotary plate
- 25: pressure spring
- 30: clutch housing
- 40: clutch center
- 50: output shaft holder
- 54: boss
- 54C: axis
- 60: center-side cam portion
- 60A: center-side assist cam surface
- 60AA: second direction end
- 60C: center-side top surface
- 60S: center-side slipper cam surface
- 60SA: second direction end
- 70: pressure plate
- 84: spring housing portion
- 84H: insertion hole
- 85: spring sheet
- 90: pressure-side cam portion
- 90A: pressure-side assist cam surface
- 90AA: first direction end
- 90C: pressure-side top surface
- 90S: pressure-side slipper cam surface
- 90SA: first direction end
- D1: first direction
- D2: second direction
- S1: first circumferential direction
- S2: second circumferential direction

## Claims

1. A clutch apparatus to transmit a rotational driving force of an input shaft to an output shaft or cut off the rotational driving force, the clutch apparatus comprising:
a clutch center housed in a clutch housing holding input-side rotary plates to be rotationally driven in response to rotational driving of the input shaft, the clutch center holding output-side rotary plates disposed alternately with the input-side rotary plates, the clutch center being rotationally driven together with the output shaft; and
a pressure plate provided so as to be movable toward or away from the clutch center and rotatable relative to the clutch center, the pressure plate being able to push the input-side rotary plates and the output-side rotary plates, wherein
the clutch center includes
an output shaft holder to which the output shaft is connected,
center-side cam portions located radially outward of the output shaft holder, the center-side cam portions including
center-side assist cam surfaces to, upon being rotated relative to the pressure plate, produce a force in a direction in which the pressure plate is moved toward the clutch center so as to increase a pushing force for the input-side rotary plates and the output-side rotary plates,
center-side slipper cam surfaces to, upon being rotated relative to the pressure plate, move the pressure plate away from the clutch center so as to reduce the pushing force for the input-side rotary plates and the output-side rotary plates, and
center-side top surfaces located between the center-side assist cam surfaces and the center-side slipper cam surfaces, and
bosses located radially outward of the output shaft holder and extending toward the pressure plate,
the pressure plate includes
pressure-side cam portions including
pressure-side assist cam surfaces configured to be able to come into contact with the center-side assist cam surfaces and to, upon being rotated relative to the clutch center, produce a force in the direction in which the pressure plate is moved toward the clutch center so as to increase the pushing force for the input-side rotary plates and the output-side rotary plates,
pressure-side slipper cam surfaces configured to be able to come into contact with the center-side slipper cam surfaces and to, upon being rotated relative to the clutch center, move the pressure plate away from the clutch center so as to reduce the pushing force for the input-side rotary plates and the output-side rotary plates, and
pressure-side top surfaces located between the pressure-side assist cam surfaces and the pressure-side slipper cam surfaces,
spring housing portions which are provided in the pressure-side cam portions so as to be recessed in a first direction from a second direction and in which pressure springs to urge the pressure plate in the first direction are housed, assuming that a direction in which the pressure plate moves toward and away from the clutch center is a movement direction, a direction in which the pressure plate moves toward the clutch center is the first direction, and a direction in which the pressure plate moves away from the clutch center is the second direction, and
ring-shaped spring sheets housed in the spring housing portions,
the spring housing portions are provided with insertion holes which pass therethrough and into which the bosses are inserted,
assuming that a direction from a first one of the pressure-side cam portions to a second one of the pressure-side cam portions in a circumferential direction is a first circumferential direction and a direction from the second one of the pressure-side cam portions to the first one of the pressure-side cam portions in the circumferential direction is a second circumferential direction, the clutch center and the pressure plate are configured to rotate in the first circumferential direction, and
with the center-side top surfaces and the pressure-side top surfaces being located at corresponding positions in the movement direction, with second direction ends of the center-side assist cam surfaces facing first direction ends of the pressure-side assist cam surfaces in the circumferential direction, and with second circumferential direction ends of the spring sheets being in abutment with second circumferential direction ends of the spring housing portions, the bosses are disposed through the insertion holes and the spring sheets, the first direction ends of the pressure-side assist cam surfaces are located in the second circumferential direction relative to the second direction ends of the center-side assist cam surfaces, and first direction ends of the pressure-side slipper cam surfaces are located in the first circumferential direction relative to second direction ends of the center-side slipper cam surfaces, the first direction ends being ends located in the first direction, the second direction ends being ends located in the second direction, the second circumferential direction ends being ends located in the second circumferential direction.

2. The clutch apparatus according to claim 1, wherein
the bosses include threaded holes into which bolts are inserted,
the threaded holes include first threaded holes to which threaded portions of the bolts are screwed, and second threaded holes into which shanks of the bolts located between heads and the threaded portions thereof are inserted, and
boundary planes between the first threaded holes and the second threaded holes in the movement direction are located in the second direction relative to the spring sheets.
